# EUROPEAN PATENT SPECIFICATION

(11) **EP 2 234 883 B1**
(45) Date of publication and mention of the grant of the patent: **02.08.2017**
(21) Application number: 08863181.7
(22) Date of filing: 15.12.2008
(51) Int. Cl.: B64C 27/20, B64C 29/00

(54) **VTOL VEHICLE AND METHOD OF OPERATING**
VTOL FAHRZEUG UND VERFAHREN ZUM BETRIEB
VÉHICULE VTOL ET PROCÉDÉ DE FONCTIONNEMENT

(30) Priority: 14.12.2007 US 6022
(43) Date of publication of application: 06.10.2010
(73) Proprietor: Urban Aeronautics Ltd., 81224 Yavne (IL)
(72) Inventor: YOELI, Raphael, 64957 Tel-aviv (IL)
(74) Representative: Faulkner, Thomas John
(86) International application number: PCT/IB2008/055301
(87) International publication number: WO 2009/077968

(56) References cited:
- WO-A2-2007/052271
- US-A1- 2004 026 563
- US-A1- 2007 034 734

## Description

This application claims priority from United States Provisional Application Serial No. 61/006,022, filed December 14, 2007.

### FIELD OF THE INVENTION

The present invention relates to flight performance improvements and control systems in general and particularly to their use with VTOL (Vertical Take-Off and Landing) aircraft.

### BACKGROUND OF THE INVENTION

Many different types of VTOL aircraft have been proposed where the weight of the vehicle in hover is carried directly by rotors or propellers, with the axis of rotation perpendicular to the ground. One well known vehicle of this type is the conventional helicopter which includes a large rotor mounted above the vehicle fuselage. Other types of vehicles rely on propellers that are installed inside circular cavities, shrouds, ducts or other types of nacelle, where the propeller or rotor is not exposed, and where the flow of air takes place inside the circular duct. Most ducts have uniform cross-sections with the exit area (usually at the bottom of the duct when the vehicle is hovering) being similar to that of the inlet area (at the top of the duct). Some ducts, however, are slightly divergent, having an exit area that is larger than the inlet area, as this was found to increase efficiency and reduce the power required per unit of lift for a given inlet diameter. Some ducts have a wide inlet lip in order to augment the thrust obtained, especially in hover. Other ducts are incomplete circles or have openings in the walls as this was found to reduce drag in forward flight or suction to side objects at their proximity.

VTOL vehicles are usually more challenging than fixed wing aircraft in terms of stability and control. The main difficulty arises from the fact that, contrary to fixed wing aircraft which accelerate on the ground until enough airspeed is achieved on their flight surfaces, VTOL vehicles hover with sometimes zero forward airspeed. For these vehicles, the control relies on utilizing the rotors or propellers themselves, or the flow of air that they produce to create control forces and moments and forces around the vehicle's center of gravity (CG).

One method, which is very common in helicopters, is to mechanically change, by command from the pilot, the pitch of the rotating rotor blades both collectively and cyclically, and to modify the main thrust as well as moments and/or inclination of the propeller's thrust line that the propeller or rotor exerts on the vehicle. Some VTOL vehicles using ducted or other propellers that are mounted inside the vehicle also employ this method of control. Some designers choose to change only the angle of all the blades using ducted or other propellers that are mounted inside the vehicle for this method of control. The angle of all the blades may be changed simultaneously (termed collective control) to avoid the added complexity of changing the angle of each blade individually (termed cyclic control). On vehicles using multiple fans which are relatively far from the CG, different collective control settings can be used on each fan to produce the desired control moments.

The disadvantage of using collective controls, and especially cyclic controls, lies in their added complexity, weight and cost. Therefore, a simple thrust unit that is also able to generate moments and side forces, while still retaining a simple rotor not needing cyclic blade pitch angle changes, has an advantage over the more complex solution. The main problem is usually the creation of rotational moments of sufficient magnitude required for control.

One traditional way of creating moments on ducted fans is to mount a discrete number of vanes at or slightly below the exit section of the duct. These vanes, which are immersed in the flow exiting the duct, can be deflected to create a side force. Since the vehicle's center of gravity is in most cases at a distance above these vanes, the side force on the vanes also creates a moment around the vehicle's CG.

However, one problem associated with vanes mounted at the exit of the duct in the usual arrangement as described above, is that even if these are able to create some moment in the desired direction, they cannot do so without creating at the same time a significant side force that has an unwanted secondary effect on the vehicle. For such vanes mounted below the vehicle's CG (which is the predominant case in practical VTOL vehicles), these side forces cause the vehicle to accelerate in directions which are usually counter-productive to the result desired through the generation of the moments by the same vanes, thereby limiting their usefulness on such vehicles.

The Chrysler VZ-6 VTOL flying car uses vanes on the exit side of the duct, together with a small number of very large wings mounted outside and above the duct inlet area.

However, in the VZ-6, the single wing and the discrete vanes were used solely for the purpose of creating a steady, constant forward propulsive force, and not for creating varying control moments as part of the stability and control system of the vehicle.

The Hornet unmanned vehicle developed by AD&D, also experimented with using either a single, movable large wing mounted outside and above the inlet, or, alternatively using a small number of vanes close to the inlet side. However these were fixed in angle and could not be moved in flight.

Another case that is sometimes seen is that of vanes installed radially from the center of the duct outwards, for the purpose of creating yawing moments (around the propeller's axis).

One of the main advantages of the ducted fan vehicle equipped with Vane Control System (VCS) and Thrust Fan Unit (TFU) described herein is the ability to fly laterally in the opposite direction to the rolling angle or to fly laterally without rolling by applying pure side force, and/or to increase the forward speed without changing the pitch attitude by changing the thrust generated with the TFU.

Conventional helicopters, in order to fly laterally, must roll their rotor disc to the same side the pilot wants to fly, and in order to increase the forward speed the helicopter must change the pitch attitude of the rotor disk. This inter-dependence of the helicopter's Degrees of Freedom (DOF), while limiting its maneuvering capability, reduces the pilot's workload to typically four controlled DOFs: pitch and roll of the main rotor (s) disk(s), yaw of the fuselage and vertical velocity.

In the ducted fan vehicles described herein, preferably six continuous and independent DOF, 3 linear and 3 angular, can be separately controlled in real-time offering advantages in maneuverability and agility, however the controlling of that number of DOF is typically beyond the capability of a common pilot. Therefore, in the ducted fan vehicles described hereinabove some artificial autopilot assistance is required, which can be applied by various methods.

WO2007/052271 shows a VOTL vehicle and is regarded as the closest prior art.

### SUMMARY OF THE INVENTION

According to an aspect of the present invention there is provided a method of operating a VTOL vehicle according to claim 1.

According to another aspect of the present invention there is provided a VTOL vehicle according to claim 8.

In a development of the present invention there is provided a flight control system for aircraft, such as for a vehicle with a ducted fan propulsion system which also produces rotary moments and side forces for control purposes. The flight control system and method of the development are designed to fit control elements which are actuated by a single point of actuation and introduce redundancies to critical components in a manner that will ensure the safety of the vehicle in event of a malfunction in any one of its channels and enable the flight to continue down to a safe landing. Other developments relate to the control and influencing of the flow field and streams around and along a body in order to enable a more efficient flight.

In one exemplary but nonlimiting development, there is provided a control system for a vehicle having plural control elements actuated at a single actuation point comprising: a redundant electric actuator assembly including a control rod moveable linearly in two opposite directions mounting n electric motors, each motor having a controller and a feedback sensor for controlling linear movement of the rod, each motor contributing approximately 1/n of total control power required for adjusting one or more of the plural control elements, such that failure of any of the motors controllers or feedback sensors leaves sufficient predetermined minimum control power available for operating the control system.

In another exemplary but nonlimiting development, there is provided a redundant actuator assembly for controlling a linear output in a vehicle control system comprising: n actuators divided into two groups, each group including n/2 single-channel actuators, each adapted to control specified control elements of the vehicle control system, the plural, single-channel actuators of each group arranged in series; one actuator of each group connected to a chassis of the vehicle, and another actuator of each group connected to a rocker arm pivotally secured to the linear output, wherein movement of the linear output is affected by movement of any one of the single-channel actuators.

In still another exemplary but nonlimiting development, there is provided a power distribution system for a VTOL vehicle having forward and aft lift fans comprising: a pair of engines connected to respective associated transmissions arranged to distribute power to an aft lift fan gearbox, each transmission also connected to a respective intermediate gearbox which, in turn, is connected to a forward lift fan gearbox, thereby establishing a redundant load path to the forward lift fan.

In still another exemplary but nonlimiting development, there is provided a method of controlling separation of a flow stream at a boundary layer along a surface of a VTOL vehicle fuselage in forward flight, the fuselage supporting a forward lift fan and an aft lift fan, the method comprising: (a) shaping a portion of the fuselage to have a substantially airfoil-shape with upper and lower surfaces; and (b) creating a suction force along the lower surface of the center portion by utilizing a low-pressure source generated at another portion of the fuselage to thereby attach the flow stream at the boundary layer to the lower surface.

Embodiments of the invention will now be described in detail in connection with the drawings identified below.

### BRIEF DESCRIPTION OF THE DRAWINGS

Embodiments of the invention are herein described, by way of example only, with reference to the accompanying drawings, wherein:
Fig. 1 illustrates one form of VTOL aircraft vehicle;
Fig. 2 illustrates only one of the ducted fans in the aircraft of Fig. 1;
Fig. 3 is a sectional view along line III -- III of Fig. 2;
Fig. 4 is a diagram illustrating the positioning of the vanes of Fig. 3 in one direction to produce a lateral force in one direction.
Fig. 5 is a diagram illustrating the positioning of the vanes of Fig. 3 to produce a lateral force in the opposite direction.
Fig. 6 illustrates a VTOL aircraft vehicle including a single ducted fan for propulsion and control purposes;
Fig. 7 is a view similar to that of Fig. 3 but illustrating the provision of a cascade or plurality of vanes also at the exit end of the duct;
Fig. 8 illustrates a VTOL vehicle with two ducted fans;
Fig. 9 illustrates an alternative construction with four ducted fans;
Fig. 10 illustrates a construction similar to Fig. 8 with free propellers, i.e., unducted fans;
Fig. 11 illustrates a construction similar to Fig. 9 with free propellers;
Fig. 12 illustrates a construction similar to that of Fig. 8 but including multiple propellers in a duct;
Figs. 13a-c are views illustrating another VTOL vehicle including pusher propellers;
Fig. 14 is a diagram illustrating an exemplary drive system in the vehicle of Figs. 13a-13c;
Fig. 15 is a diagram illustrating another exemplary drive system for the vehicle shown in Figs. 13a-13c;
Fig. 16 is a perspective rear view of a vehicle equipped with a lower skirt for converting the vehicle to a hovercraft;
Fig. 17 is a pictorial illustration of an alternative vehicle arrangement;
Fig. 18 is a pictorial illustration of the vehicle of Fig. 17 equipped with a lower skirt for converting the vehicle to a hovercraft;
Figs. 19-23 illustrate an alternative flight control system;
Figs. 24a-c are illustrations of a quad redundant electric actuator control;
Figs. 25a-b are illustrations of a different quad redundant electric actuator control;
Figs. 26a-c are illustrations of transmission systems;
Figs. 27a-e are illustrations of aerodynamic flow separation and techniques for preventing separation ;
Fig. 28 is an illustration of a ducted fan vehicle and flows using the technique shown in Fig. 27(e);
Figs. 29a-b are illustrations of a ducted fan vehicle rotor effects and flows and improvements based on differential rotor or fan operation; and
Figs. 30 is a graph showing an improvement in lift/drag ratio based on vehicle operation as shown in Fig. 29(b).

### DESCRIPTION OF PREFERRED EMBODIMENTS

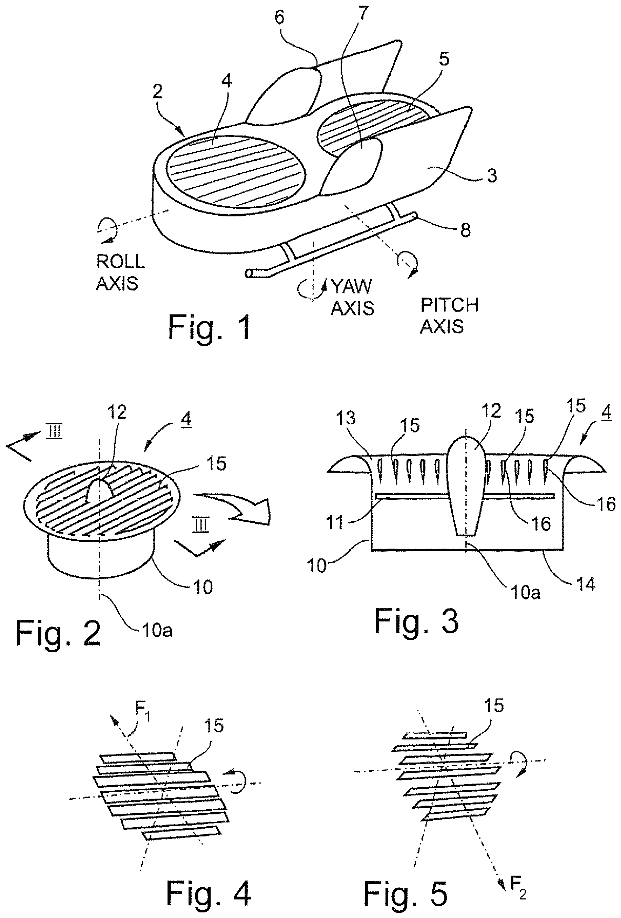

The vehicle 2 illustrated in Fig. 1, is a VTOL aircraft including a frame or fuselage 3 carrying a ducted fan propulsion unit 4 at the front, and another similar propulsion unit 5 at the rear. The vehicle payload is shown at 6 and 7, respectively, on opposite sides of the fuselage, and the landing gear is shown at 8.

Figs. 2 and 3 more particularly illustrate the structure of propulsion unit 4, which is the same as propulsion unit 5. Such a propulsion unit includes a duct 10 carried by the fuselage 3 with the vertical axis 10a of the duct parallel to the vertical axis of the vehicle. Propeller 11 is rotatably mounted within the duct 10 about the longitudinal axis 10a of the duct. Nose 12 of the propeller faces upwardly, so that the upper end 13 of the duct constitutes the air inlet end, and the lower end 14 of the duct constitutes the exit end. As shown particularly in Fig. 3, the upper air inlet end 13 is formed with a funnel-shaped mouth to produce a smooth inflow of air into the duct 10, which air is discharged at high velocity through the exit end 14 of the duct for creating an upward lift force.

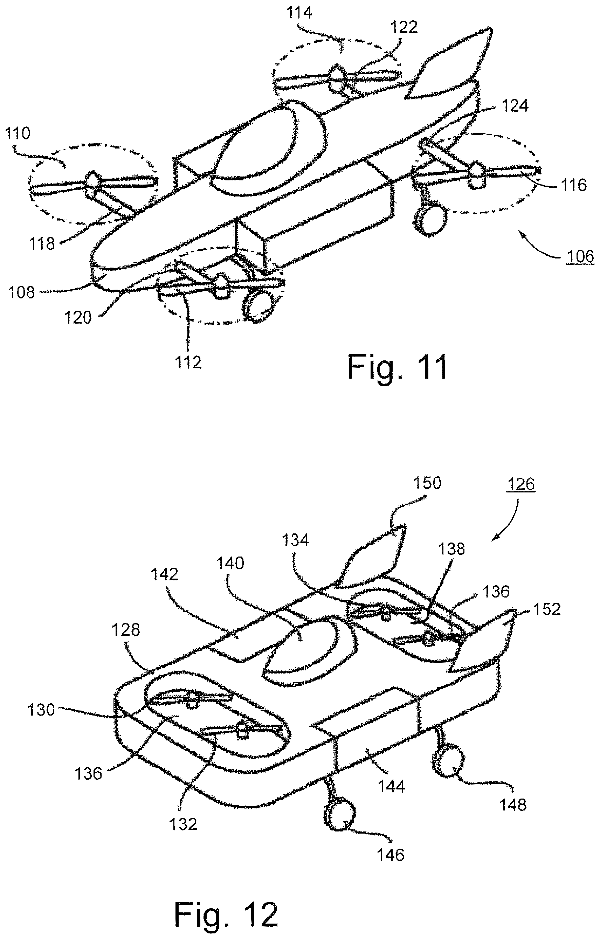

To provide directional control, the duct 10 is provided with a plurality of parallel, spaced vanes 15 pivotally mounted to, and across, the inlet end 13 of the duct. Each of the vanes 15 is pivotal about an axis 16 perpendicular to the longitudinal axis 10a of the duct 10 and substantially parallel to the longitudinal axis of the vehicle frame 2, to produce a desired horizontal control force in addition to the lift force applied to the vehicle by the movement of air produced by the propeller 11. Thus, as shown in Fig. 4, if the vanes 15 are pivoted in one direction about their respective axes, they produce a desired control force in the direction of the arrow F1 in Fig. 4; and if they are pivoted in the opposite direction, they produce a desired control force in the direction of the arrow F2 in Fig. 5. As shown in Fig. 3 (also Fig. 12), the vanes 15 are of a symmetric airfoil shape and are spaced from each other a distance approximately equal to the chord length of the vanes. It should be appreciated that the vanes may be also of other configurations and shapes; for example, they can be partially or fully non pivotally mounted having means of affecting the ambient fluid through either constant or oscillatory blowing, or alternatively by either constant or oscillatory suction of auxiliary air either through the vanes or in vicinity of vanes, or alternatively by inducing vibratory oscillations to the ambient air, through Piezoelectric devices mounted to the surface, or alternatively installed inside the vanes or through other active flow control means, thereby affecting flow around the vanes to generate a desired horizontal force component to the lift force applied to the vehicle.

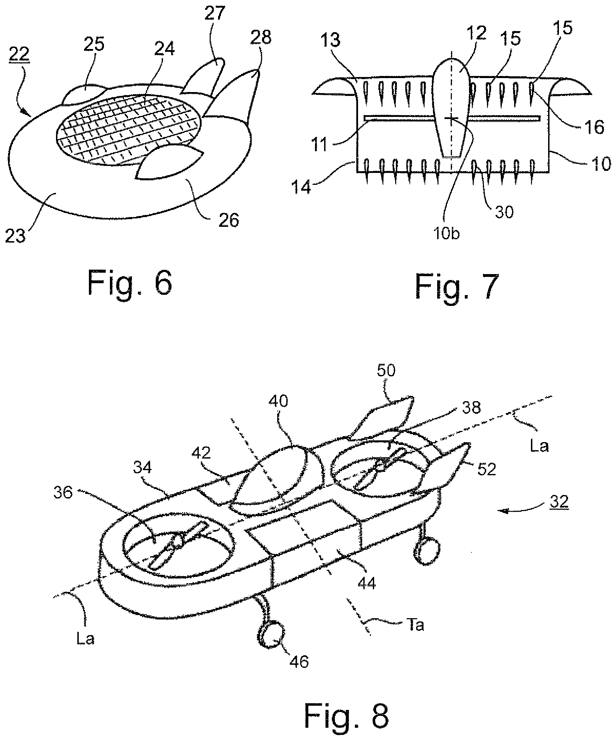

Fig. 6 illustrates a VTOL aircraft vehicle 22, including a single ducted fan 24 carried centrally of its fuselage 23. Such a vehicle could include the arrangement of vanes illustrated in either Fig. 3 or variation wherein the ducted fan includes a second plurality or cascade of vanes mounted to and across the inlet end of the duct whereby, each of the vanes of the second plurality is spaced pivotal or non pivotal fully or partially about an axis perpendicular to the pivotal axis of the first group of vanes, as well as to the longitudinal axis of the duct, to provide the desired control forces and moments in addition to the lift forces. In such a vehicle, the payload may be on opposite sides of the central ducted fan 24, as shown at 25 and 26 in Fig. 6. The vehicle may also include other aerodynamic surfaces, such as rudders 27, 28 to provide steering and other controls as well as additional power plant system to provide for forward flight.

Fig. 7 illustrates a further embodiment that may be included in either of the vehicles of Figs. 1 and 6 wherein the duct 10 also has a second plurality or cascade of parallel, spaced vanes 30, but in this case, the second plurality are pivotally mounted to and across the exit end 14 of the duct 10. Thus, as shown in Fig. 7, the duct 10 includes the first plurality or cascade of vanes or blades 15 mounted to and across the inlet end 13 of the duct, and a second plurality or cascade of vanes or blades 30 mounted to and across the exit end 14 of the duct 10, also perpendicular to the longitudinal axis of the duct and substantially parallel to the longitudinal axis of the vehicle frame. Each assembly or cascade 15, 30 of the vanes may be pivoted independently of the other to produce selected side forces or rotary moments about the duct's transverse axis 10b for pitch or roll control of the vehicle. It should be appreciated that the vanes either at the inlet or at the exit of the duct 10 or both may be also of other configurations and shapes for example they can be partially or fully non pivotally mounted as described in connection with Figs. 3-5.

It will be appreciated that any of the foregoing arrangements may be used in any of the above-described air vehicles to produce the desired control forces in addition to the lift forces. The vanes are not intended to block air flow, but merely to deflect air flow to produce the desired control forces. Accordingly, in most applications the vanes would be designed to be pivotal no more than 15° in either direction, which is the typical maximum angle attainable before flow separation. Since the control forces and moments are generated by horizontal components of the lift forces on the vanes themselves, the vanes should preferably be placed on the intake side of the propeller as far from the center of gravity of the vehicle as possible for creating the largest attainable moments. The same applies if vanes are provided on the exit side of the ducts.

In Fig. 8, a vehicle, generally designated 32, includes a fuselage 34 having a longitudinal axis LA and a transverse axis TA. Vehicle 32 further includes two lift-producing propellers 36, 38 carried at the opposite ends of the fuselage 34 along its longitudinal axis LA and on opposite sides of its transverse axis TA. Lift-producing propellers 36, 38 are ducted fan propulsion units extending vertically through the fuselage and rotatable about vertical axes to propel the air downwardly and thereby to produce an upward lift.

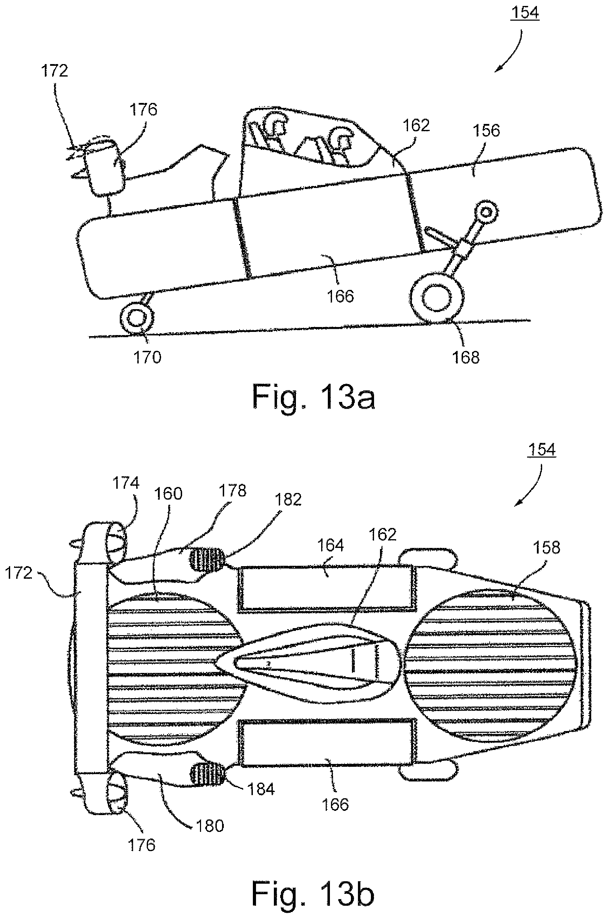

Vehicle 32 further includes a pilot's compartment 40 formed in the fuselage 34 between the lift-producing propellers 36, 38 and substantially aligned with the longitudinal axis LA and transverse axis TA of the fuselage. The pilot's compartment 40 may be dimensioned so as to accommodate a single pilot or two (or more) pilots, as shown, for example, in Fig. 13a.

Vehicle 32 illustrated in Fig. 8 further includes a pair of payload bays 42, 44 formed in the fuselage 34 laterally on the opposite sides of the pilot's compartment 40 and between the lift-producing propellers 36, 38. The payload bays 42, 44 shown in Fig. 8 are substantially flush with the fuselage 34.

Vehicle 32 illustrated in Fig. 8 further includes a front landing gear 46 and a rear landing gear 48 mounted at the opposite ends of its fuselage 34 which may be retractable or non-retractable. Aerodynamic stabilizing surfaces may also be provided, if desired, as shown by the vertical stabilizers 50, 52 carried at the rear end of fuselage 34 on the opposite sides of its longitudinal axis LA.

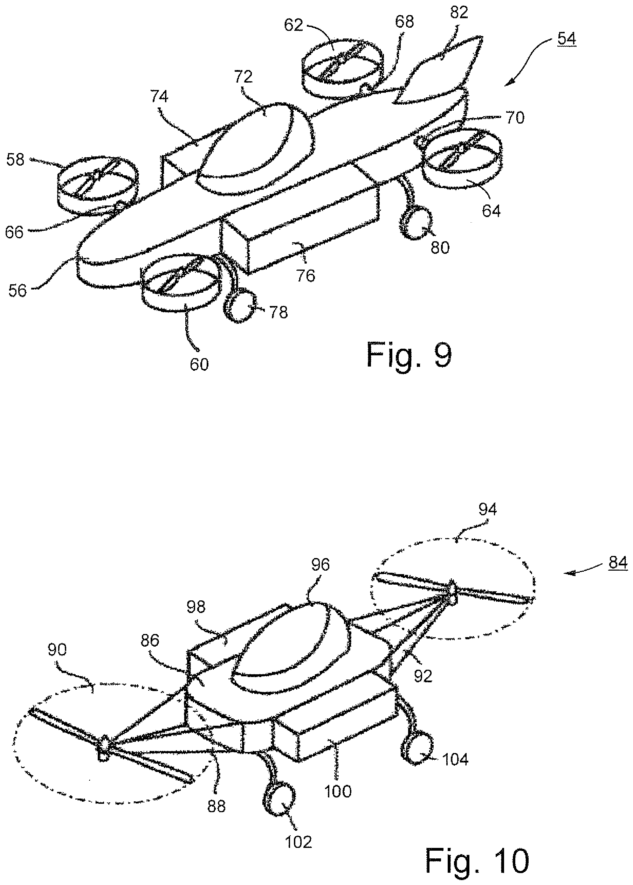

In the vehicle 54 of Fig. 9, the fuselage 56 is provided with a pair of lift-producing propellers on each side of the transverse axis of the fuselage. Thus, the vehicle 54 includes a pair of lift-producing propellers 58, 60 at the front end of the fuselage 56, and another pair of lift-producing propellers 62, 64 at the rear end of the fuselage. The lift-producing propellers 62, 64 are also ducted fan propulsion units. However, instead of being formed in the fuselage 56, they are mounted on mounting structures (three shown at 66, 68, 70) that project laterally of the fuselage.

Vehicle 54 also includes the pilot's compartment 72 formed in the fuselage 56 between the two pairs of lift-producing propellers 58, 60, 62, 64, respectively. As in the case of the pilot's compartment 40 in Fig. 8, the pilot's compartment 72 in Fig. 9 is also substantially aligned with the longitudinal axis LA and transverse axis TA of the fuselage 56.

Vehicle 54 illustrated in Fig. 9 further includes a pair of payload bays 74, 76 formed in the fuselage 56 laterally of the pilot's compartment 72 and between the two pairs of lift-producing propellers 58, 60 and 62, 64.

Vehicle 54 also includes a front landing gear 78 and a rear landing gear 80, and a vertical stabilizer 82 at the rear end of the fuselage 56 aligned with its longitudinal axis. It will be appreciated however, that vehicle could also include a pair of vertical stabilizers, as shown at 50 and 52 in Fig. 8, or could be constructed without any such aerodynamic stabilizing surface.

Fig. 10 illustrates a vehicle 84 also including a fuselage 86 of a very simple construction having a forward mounting structure 88 for mounting the forward lift-producing propeller 90, and a rear mounting structure 92 for mounting the rear lift-producing propeller 94. Both propellers are unducted, i.e., free, propellers. Fuselage 86 is formed centrally thereof with a pilots compartment 96 and carries the two payload bays 98, 100 on its opposite sides laterally of the pilot's compartment.

Vehicle 84 also includes a front landing gear 102 and a rear landing gear 104, but for simplification purposes, it does not include an aerodynamic stabilizing surface corresponding to vertical stabilizers 50, 52 in Fig. 8.

Fig. 11 illustrates a vehicle 106 of a similar construction as in Fig. 9 but including a fuselage 108 mounting a pair of unducted propellers 110, 112 at its front end, and a pair of unducted propellers 114, 116 at its rear end by means of mounting structures 118, 120, 122, 124, respectively.

Fig. 12 illustrates a vehicle 126, including a fuselage 128 mounting a pair of lift-producing propellers 130, 132 at its front end, and another pair 134, 136 at its rear end. Each pair of lift-producing propellers 130, 132 and 132, 134 is enclosed within a common duct 136, 138 at the respective ends of the fuselage.

Vehicle 126 further includes a pilot's compartment 140 formed centrally of the fuselage 128, a pair of payload bays 142, 144 laterally of the pilot's compartment 140, a front landing gear 146, a rear landing gear 148, and vertical stabilizers 150, 152 carried at the rear end of the fuselage 128.

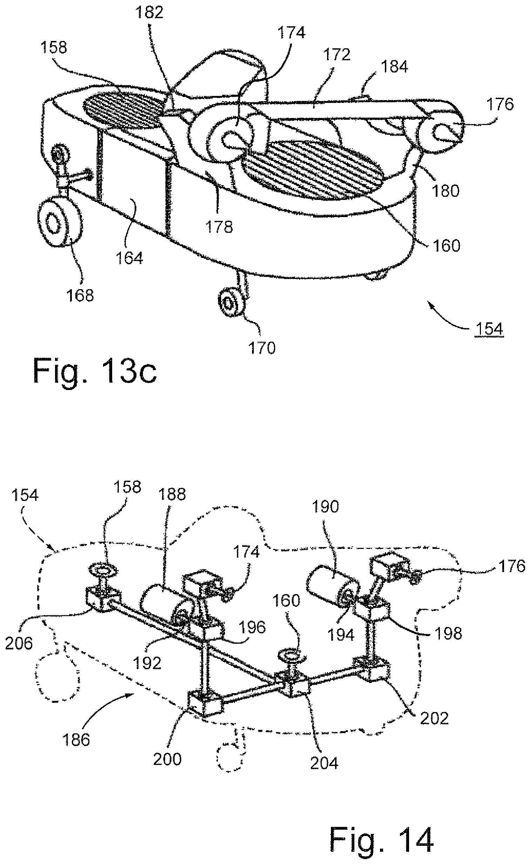

Figs. 13a, 13b and 13c are side, top and rear views, respectively, of another vehicle 154, including a fuselage 156 mounting a lift-producing propeller (or ducted fan) 158, 160 at its front and rear ends, respectively. The latter propellers are preferably ducted units as in Fig. 8 which ducts may employ vanes such as illustrated in Fig. 3, Fig. 6 and Fig. 7 hereinabove.

Vehicle 154 further includes a pilot's compartment 162 centrally of the fuselage 156, a pair of payload bays 164, 166 laterally of the fuselage and of the pilot's compartment, a front landing gear 168, a rear landing gear 170, and a stabilizer, which, in this case, is a horizontal stabilizer 172 extending across the rear end of the fuselage 156.

Vehicle 154 further includes a pair of pusher propellers or thrusters 174, 176, mounted towards the rear end of the fuselage 156 at the opposite ends of the fuselage. The rear end of the fuselage 156 may be formed with a pair of pylons 178, 180, for mounting the two pusher propellers 174, 176, together with the horizontal stabilizer 172.

The two pusher propellers 174, 176 are preferably variable-pitch propellers enabling the vehicle to attain higher horizontal speeds. The horizontal stabilizer 172 is used to trim the vehicle's pitching moment caused by the ducted fans 158, 160, thereby enabling the vehicle to remain horizontal during high speed flight.

Each of the pusher propellers 174, 176 is driven by an engine enclosed within the respective pylon 178, 180. The two engines are preferably turbo-shaft engines. Each pylon is thus formed with an air inlet 182, 184 at the forward end of the respective pylon, and with an air outlet (not shown) at the rear end of the respective pylon.

Fig. 14 schematically illustrates the drive within the vehicle 154 for driving the two ducted fans 158, 160 as well as the pusher propellers 174, 176. The drive system, generally designated 186, includes two engines 188, 190, each incorporated in an engine compartment within one of the two pylons 178, 180. Each engine 188, 190, is coupled by an overrunning clutch 192, 194, to a gear box 196, 198 coupled on one side to the respective thrust propeller 174, 176, and on the opposite side to a transmission for coupling to the two ducted fans 158, 160 at the opposite ends of the fuselage. Thus, as schematically shown in Fig. 14, the latter transmission includes additional gear boxes 200, 202 coupled to rear gear box 204 for driving the rear ducted fan 160, and front gear box 206 for driving the front ducted fan 158.

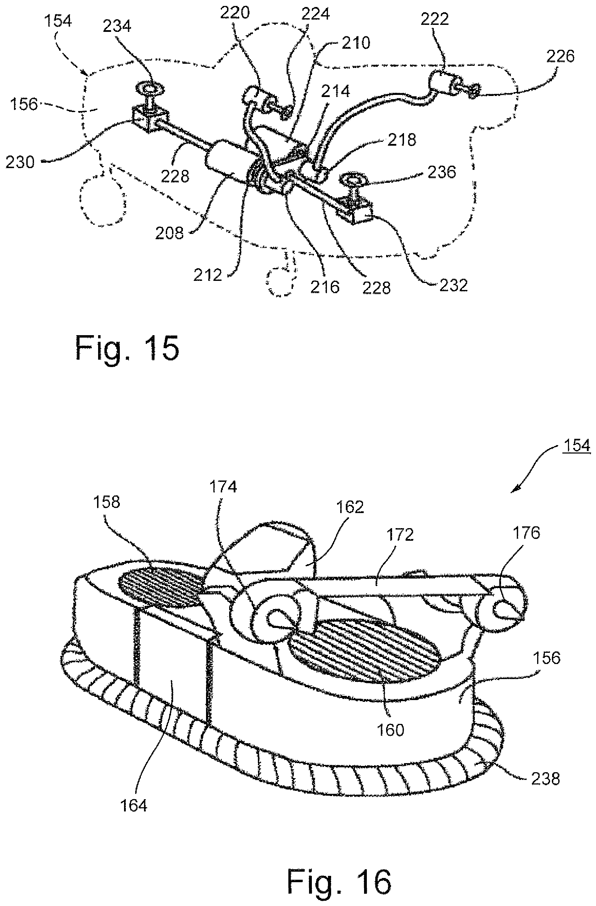

Fig. 15 schematically illustrates another exemplary drive system for the vehicle 154 including two engines 208, 210 for driving the two ducted fans and the two pusher propellers respectively. However, whereas in Figure 14 the two engines are located in separate engine compartments in the two pylons, here both engines are incorporated in a common engine compartment (not shown). The two engines 208, 210 may also be turbo-shaft engines as in Fig. 14. For this purpose, the central portion of the fuselage 156 maybe formed with a pair of air inlet openings (not shown) forward of the pilot's compartment, and with a pair of air outlet openings (also not shown) rearwardly of the pilot's compartment.

The two engines 208, 210 drive, via overrunning clutches 212, 214, a pair of hydraulic pumps 216, 218, which in turn drive the drives 220, 222 of the two pusher propellers 224, 226. The two engines 208, 210 are further coupled to a drive shaft 228 which drives the drives 230, 232 of the two ducted fans 234, 236, respectively.

Fig. 16 illustrates how the vehicle, such as vehicle 154 illustrated in Figs. 13a-c, may be converted to a hovercraft for traveling over ground or water. Thus, the vehicle 154 is basically of the same construction as described above with respect to Figs. 13a-c. In vehicle 154 as illustrated in Fig. 16, however, the landing gear wheels 168, 170 have been removed, folded, or otherwise stowed, and instead, a skirt 238 has been applied around the lower end of the fuselage 156. The ducted fans 158, 160, may be operated at very low power to create enough pressure to cause the vehicle to hover over the ground or water as in hovercraft vehicles. The variable pitch pusher propellers 174, 176 would provide forward or rear movement, as well as steering control, by individually varying the pitch, as desired, of each propeller.

The vehicle 154 may also be used for movement on the ground thus, the front and rear wheels of the landing gear can be driven by electric or hydraulic motors included within the vehicle.

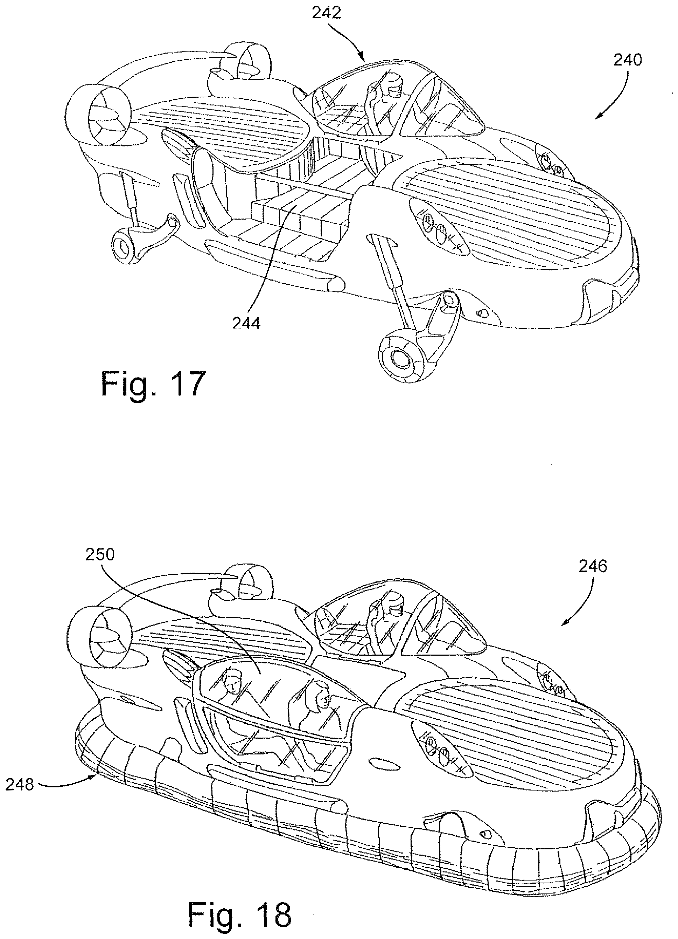

Fig. 17 is an illustration of an alternative ducted fan vehicle arrangement wherein the vehicle 240 has the pilot's cockpit 242 installed to one side of the vehicle and the payload compartment 244 substantially at its side. There are various alternative payload possibilities besides the open one shown such as closed or covered compartments, depending on the desired functions of the vehicle.

It is appreciated that the mechanical arrangement of engines, drive shafts and gearboxes for the vehicle of Fig. 17 may be that described with reference to Fig. 14.

Fig. 18 is a pictorial illustration of another vehicle 246 constructed typically in accordance with the configuration in Fig. 17 but equipped with a lower, flexible skirt 248 for converting the vehicle to a hovercraft for movement over ground or water. In addition, the open payload bay 244 has been closed by a canopy 250.

While Figs. 17 and 18 show a vehicle having a cockpit on the left hand side and a payload bay to the right hand side, it is appreciated that alternative arrangements are possible, such as where the cockpit is on the right hand side and the payload bay is on the left hand side.

With regard to all of the vehicles described herein, it should be appreciated that they may employ partially or fully pivotal or non pivotal vanes of various shapes (airfoil or other) and configurations either at the inlet or exit of the ducts or both, and with vane configurations such as described in Figs. 1-7.

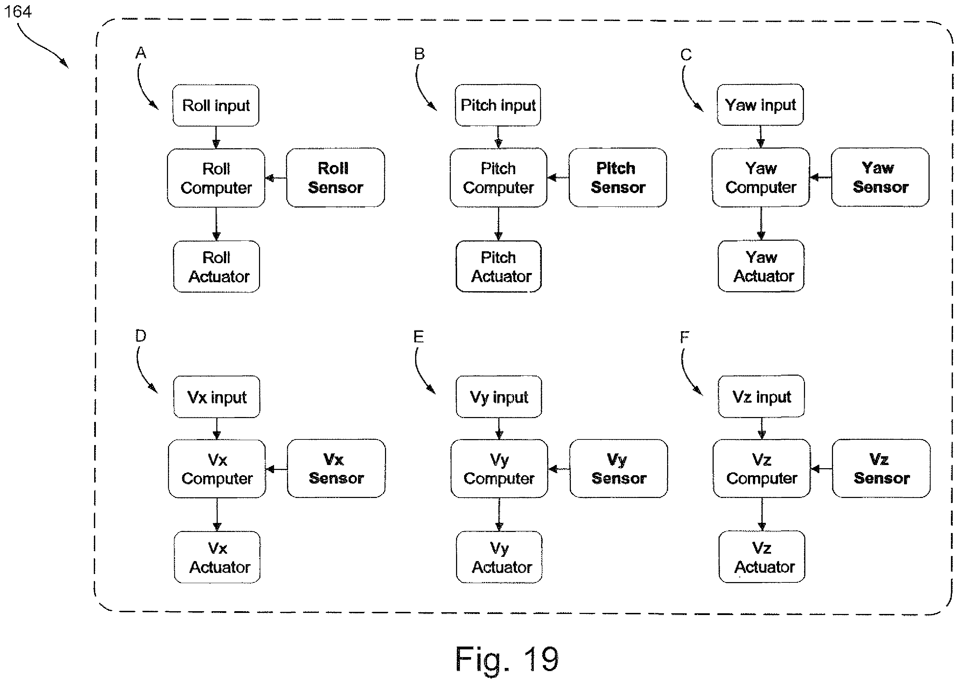

Reference is now made to Figs. 19-23, which illustrate in diagrammatic form an alternative flight control system (FCS) arrangement, constructed and operative in accordance with a preferred embodiment. A typical control system includes 3 elementary parts: input, output and feedback. In a flight control system the inputs are typically the pilot grips (including all pilot controls such as pedals, collective etc.); the outputs are typically the various actuators in the vehicle; and feedback is typically provided by sensors that measure the inertial parameters of the vehicle. Typically, each FCS output, controls one of the vehicle's 6 degrees of freedom (DOF): motion in roll, pitch, yaw and linear motion along axes Vₓ, V_{y} and V_{z}. Fig 19 illustrates a typical FCS with 6 control subsystems, each corresponding to one DOF and having an input, sensor, computer and actuator.

The FCS may control the vehicle in all 6 DOF (i.e. 3 angular velocities and 3 linear velocities) but need not be limited to this number of control parameters (i.e. speed control, altitude control may be also controlled by the FCS).

The control system architecture of the current invention is designed in a manner that will ensure a safe landing of the vehicle in the event of malfunction of any individual (i.e. first malfunction of any part of the FCS system) part of the FCS. In order to facilitate this feature each input and output control element is divided into more than one section, each having either equal or unequal control power (CP).

In the described example, each control element of the FCS is divided into 4 equal sections having equal CP. The description herein assumes this number of sections but it is not limited to 4 or any other number of sections.

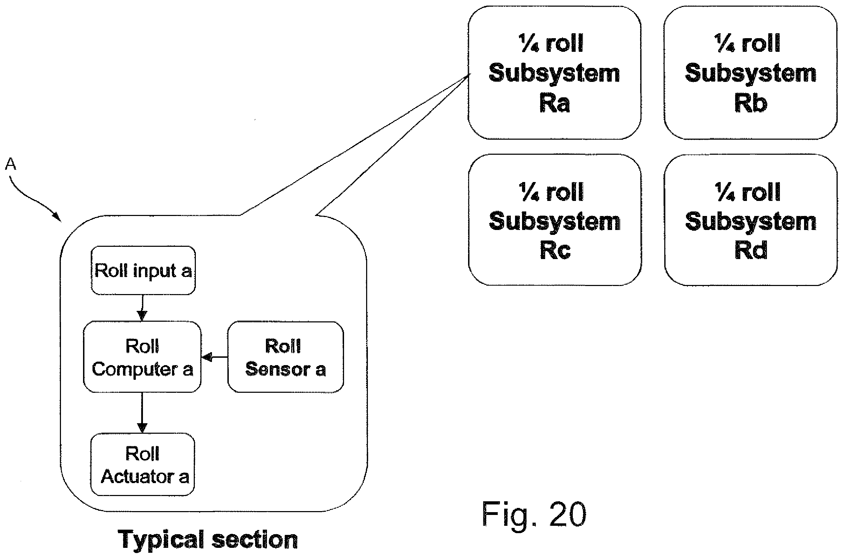

Fig 20 illustrates one such control subsystem. There are 4 independent input Potentiometers (or RVDT, LVDT or any other measuring device) that read the pilot command, 4 actuators, each one controlling part of the total control power (CP) of this subsystem, and 4 sensors, each one measuring the physical parameter, such as roll pitch and yaw rate and X Y and Z velocities, for feedback. The sum of the CP of all the sections is higher than the CP required for safe landing.

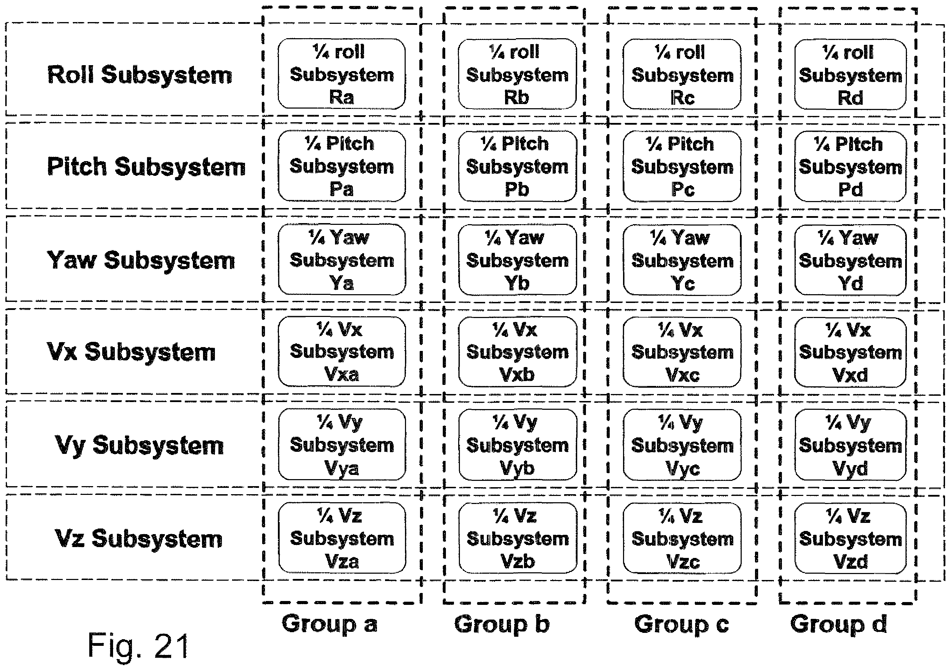

Fig 21 illustrates the grouping method: The control subsystems are grouped into 4 groups (a through d)according to the following rules:
1. In each group there are at least 2 different subsystems that partially control two different DOF's
2. These subsystem may share a computer to compute the control rules
3. Each group is characterized by having one or more points where a failure (i.e. the computer, sensor pack etc.) will cause the entire group to fail.
4. Each group operates independently from the other groups.
Note: information may be shared between groups if desired.

A single point of failure is defined as a failure that will shut down the entire group.

The FCS subsystem sections are grouped in a manner that in one group there is one section from each subsystem.

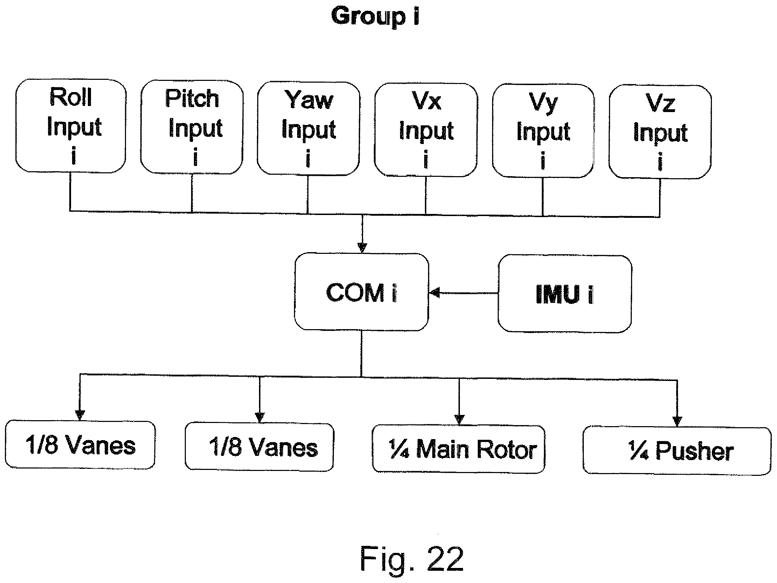

Fig 22 illustrates a typical group. The single point of failure is the computer and the IMU sensor. The group has 6 inputs from the pilot grips. The IMU block represents a collection of sensors that supply the feedback path to the subsystems. These sensors may measure inertial or non-inertial parameters or any other physical parameters that are required for the control system. Control systems that control a physical parameter require a feedback channel that measures the controlled parameter and compare it to the desired one. This is called a feedback path. For example if you need to control the roll rate you measure the current roll rate, compare it to the desired one and give command to the actuator. The IMU may be packed in a single package that transfers the information in a single transmission path (becoming a single point of failure) or it may be a collection of separate sensors that transfer the information in multiple transmission paths (and not being a single point of failure). The control loop calculation is performed by the computer and the output is forwarded to 4 actuators, each one controlling a different subsystem. In the current example there are only 4 outputs that control all 6 DOF since the two 1/8 vanes outputs control the roll and Vy, as will be explained later.

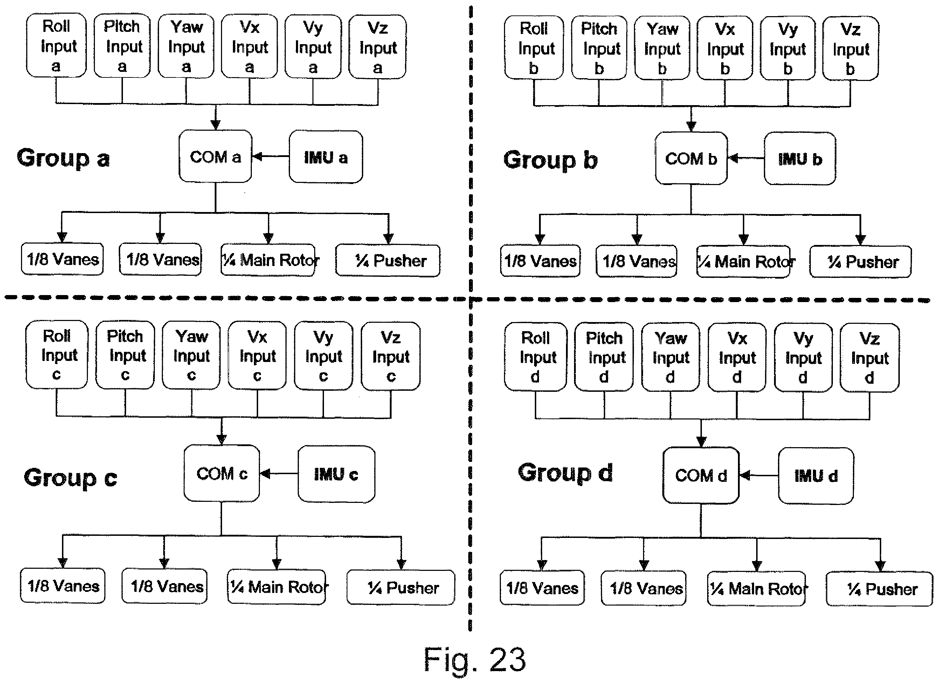

Fig 23 illustrates the FCS groups in the current vehicle. The FCS is divided into 4 independent groups, each group controlling 1/4 of the total CP of the vehicle. Each group has its own inputs from the pilot grips, inputs from the IMU and a computer that generates the output for the actuators.

The failure sequence description of the current example is as follows: A malfunction in a group can cause a partial or total malfunction of that group or of any of its subsystems. In case of partial or total failure the CP of the remaining groups will be sufficient for safe landing. It should be mentioned that in a case where the overall CP is significantly higher that the CP required for safe landing, the loss of even more than one group may potentially be tolerated, depending on the configuration. Thus, for example, where CPx is the control power required for a safe landing, and n of m groups fail, as long as the CPr of the remaining m-n groups is >= CPx, the vehicle may land safely.

Operation of the control system of Fig. 23 is now described with respect to the main lift rotors. Control of the pitch of the blades on both main lift rotors may be accomplished by four separate computers in four separated groups (COM a-d). Each computer reads independently the position of the collective control, as well as the longitudinal stick position. Each computer also reads information on the vehicle's inertial position, rate and acceleration, altitude and airspeed from the inertial position, rate and acceleration, altitude and airspeed sensors connected to the said computer. Each computer commands ¼ of the available travel of the blade pitch change actuators connected to the main lift rotors.

Due to the above arrangement, a failure of one group of the four will merely result in the main lift rotors not being able to change their blade pitch angles through more than ¾ of their overall range. It will be appreciated that in event of a runaway malfunction (e.g." loss of 2 of 4 groups), half of the normal travel will still be available. It will be further appreciated by analyzing the overall behavior of the vehicle that sufficient control is still available for carrying out a controlled descent to a landing assuming CPr=CPx .

Operation of the control system of Fig. 23 is now described with respect to control of the vehicle's aerodynamic vane surfaces. In an exemplary configuration a vehicle has 400 vanes powered by 8 separate actuators in a manner similar to that which is required for rotor blade pitch change. However, here each actuator moves its own section of typically 50 vanes through the total useful range of movement of the vanes, such as 10 degrees to each side and as dictated by aerodynamic considerations. Any two sections of vanes control the vehicle in roll yaw and Vy DOF depending on the relative vane movement between these two sections. Each group controls two sections of vanes, therefore each group controls both roll yaw and Vy DOF.

Operation of the control system of Fig. 23 is now described with respect to control of the vehicle's pusher propellers. Control of the vehicles pusher propellers is similar to that of the main lift rotors. However, it will be appreciated that since the pusher propellers are not critical to the controllability of the vehicle and its ability to perform a safe landing, the redundancy provided to the pusher propellers may be reduced, such as to two control groups instead of the four-group arrangement shown for the other control groups.

Operation of the control system of Fig. 23 is now described with respect to control of the vehicle's inertial and other sensors. In the system of Fig. 23, four separate inertial position, rate and acceleration, altitude and airspeed sensors (IMU) are installed. Each IMU is connected to a different computer.

While the example has been described above particularly with respect to air vehicles, it will be appreciated that the example, or various aspects of the example as described above, can also be advantageously used with other types of aircraft control, such as by providing control path redundancy to collective and cyclic control mechanisms, tail rotor controls, or any other types of controls typically found in other fixed-wing or rotary-wing aircraft. Also it will be appreciated that the example, or various aspects of the example as described above can be advantageously used with other non flying control systems whereas the CPx is the control power required to maintain its survival or operation after the failure, as explained above.

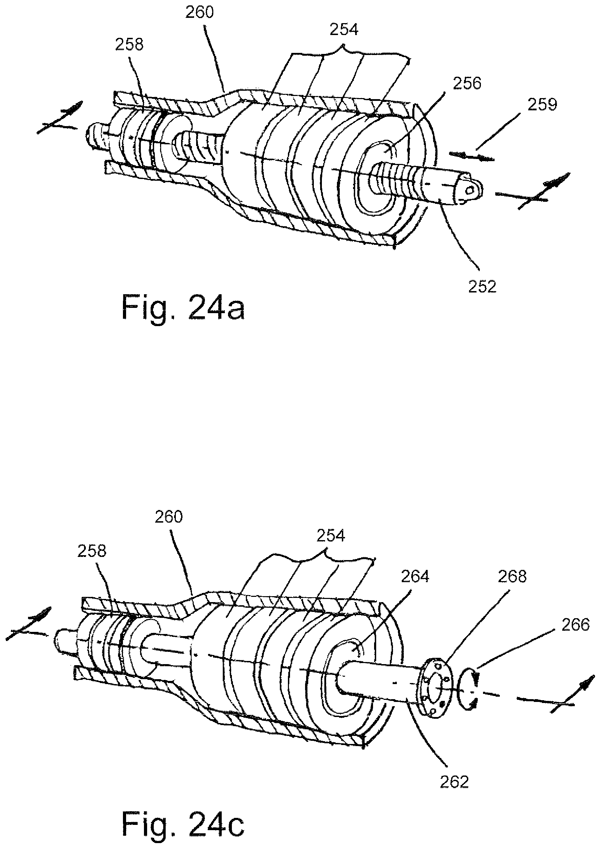

Figs. 24a-c schematically illustrate an example of a quad redundant electric actuator (QREA) used in systems where the controlled elements cannot be divided into separate groups as described hereinabove but are actuated by a single actuation point.

A common method to deal with redundancy of actuation systems is using one or more standby systems that are activated in case of main or active system failure or malfunction. In order to identify malfunction or failure conditions there is required a voting system which compares the main system with the standby system and determines which one is correct and whether the main system should be replaced by one of the standby systems. It should be appreciated that there can be combinations of multiple main and standby systems and variations in their operation. The detriments of the voting method are that typically there is no redundancy for the voting system itself and that the standby system stays substantially idle until it is required to begin operation without certain knowledge about its actual condition and whether it is really fit to replace the corrupted main system at the instant when it is needed. It should also be appreciated that usually at least two systems, standby and voting, additional to the main system are necessary in order to determine and handle a failure condition with certainty, hence the total overall price of the voting control system paid in cost, weight, power or other parameter is substantially higher than is necessary for the actual normal operation of the main system.

A proposed alternative method to the voting control system was introduced in Figs. 19-23 in which the control system is divided into independent groups or sections, four groups in this example, each controlling a portion of the total control power of the system. In this concept there is no standby system or group and all the groups are operative substantially continuously with no need for a voting mechanism.

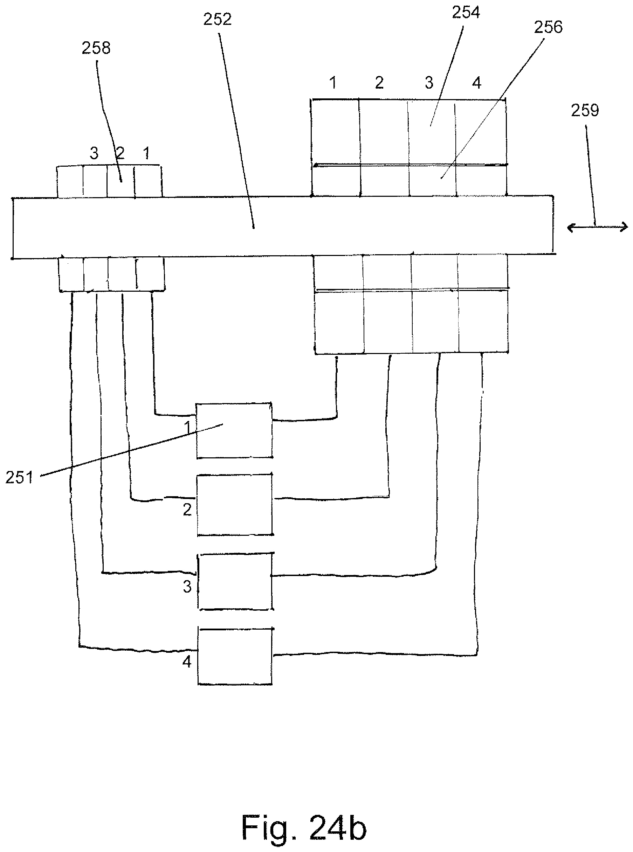

There are cases, however, for example in the collective control of the rotor blade pitch angle of an aerial vehicle or in a steering wheel of a car, where it is not physically possible to divide the controlled system or element into independent groups since it is actuated by a single actuation point. As schematically illustrated in Fig. 24a this limitation is overcome by introducing the QREA of the present disclosure consisting of a threaded rod such as, but not limited to, a ball screw 252 that serves as common mount to four separate electric motors 254 each connected to corresponding separate, threaded nuts 256 which when rotating, and provided that the ball screw 252 is constrained from rotating, cause the ball screw 252 to move forward and backwards as shown by arrow 259 within a stationary housing 260. As illustrated in Fig. 24b, which is a schematic diagram of the system described in Fig. 24a, the motors 254 are controlled by separate controllers 257 with separate ball screw position feedback sensors 258 wherein the QREA of the present disclosure is comprised of four independent groups each containing a motor a controller and a feedback sensor, and can function similarly to the group control system described in Figs. 19-23 hereinabove. It should be appreciated that it is possible to have communication among the groups or connections to other elements and devices provided however that the principle of their individual independence is retained.

Fig. 24c illustrates another preferred embodiment wherein unlike the ball screw 252 of Fig. 24a, a plain shaft 262 is rotating with rotors 264 (as shown by arrow 266) and connected through a flange or another joint 268 to a bell crank or equivalent output device operating the affected control either directly or through hydraulic, hydrostatic, mechanical or other linkage for increasing the torque produced.

As each group in the system is designed to have substantially half of the total power necessary to actuate the said element, the initial total power of the group before failure is substantially twice than the required power (1/2 x 4 = 2) so that in a failure situation where one out of the four groups fails whether it is non operative or partially operative the remaining groups have more than enough of the control power to meet the requirements. In a worst case failure situation where one group is operating at its full load but opposite to the correct actuation direction the other groups will compensate for it by countering the fault group and still remaining with substantially full power to operate the system.

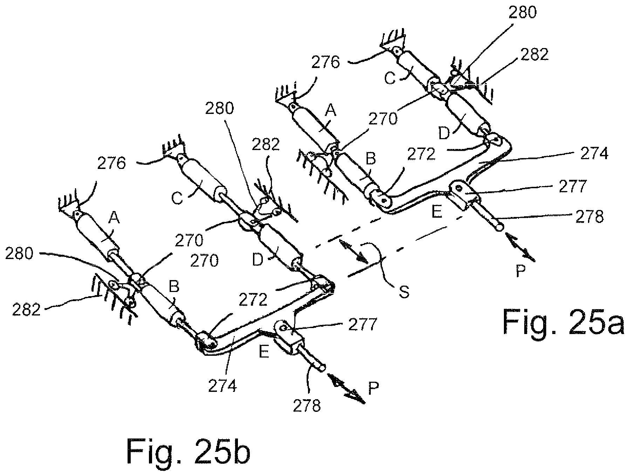

Figs. 25a-b schematically illustrate another preferred embodiment of a QREA wherein four single channel actuators A, B, C, D are arranged in two substantially equal groups each having two corresponding actuators A, B and C, D connected between them in series by joints 270 and at one end connected by swivel joints 272 to opposite sides of a rocker arm 274 and at the other end connected by joints 276 to the vehicle's chassis. Each of the individual four actuators is part of independent groups similar to the independent control groups described hereinabove. The actuation of at least part of the actuators A, B, C, D cause them to move forward from the initial retracted position illustrated in Fig. 25a to an extended position illustrated in Fig. 25b thereby moving the rocker arm 277 forward up to a maximum distance S from its previous position which consequently via swivel joint 274 moves the actuated object 278 up to a distance P. It should be appreciated that the actual overall shift P is affected by the various combinations of the movements of the individual actuators for example when all four actuators are fully activated S = P, when combinations of two actuators such as A and D or C and D are fully activated S = 2P and when three out of the four actuators are fully activated P = 0.75S whereby it can be shown that this actuation embodiment yields similar effect as of the embodiments illustrated in Figs. 24a-c. It should be appreciated that the motion of the actuators can be channeled and directed by guiding mechanisms such for example as linearly-moveable cradles 280 which are attached at one point to joints 270 and can translate by wheels or other slides substantially along the relatively fixed surfaces 282.

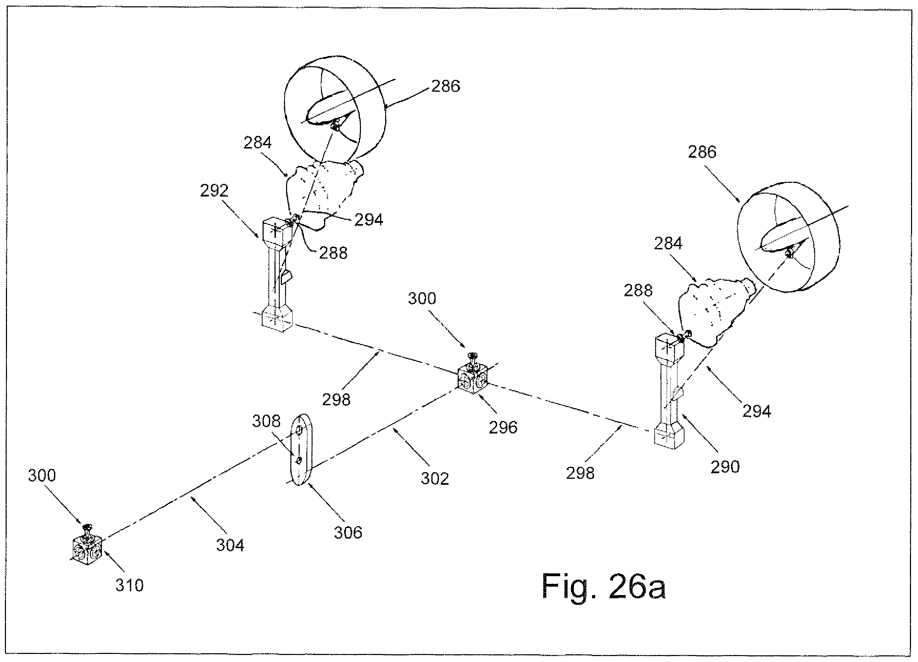

Figs. 26a-c schematically illustrate transmission systems of ducted fan vehicles other than the drive train described in Fig. 14 hereinabove.

Fig. 26a shows an arrangement of a power distribution system for transmitting the power from each of the rear mounted engines to the two lifting fans and two pusher fans such as found in the vehicle shown in Figs. 13a-c. As can be seen, two engines 284 are preferably used to drive the two main lift rotors and the two pushers or thrust fans 286 through a series of shafts and gearboxes. The power takeoff (PTO) of each engine is connected through a short shaft 288 to the right hand side (RHS) and left hand side (LHS) aft transmissions designated 290 and 292 respectively. From these transmissions, the power is distributed both to the aft pusher props or thrust fans 286 through diagonally oriented shafts 294 as well as to the aft lift rotor gearbox 296 through two horizontally mounted shafts 298. The two main lift rotors are connected to their respective gearboxes through prop flanges 300. The shaft interconnecting both main lift rotors is divided into two segments designated as 302 and 304, connected by a center gearbox 306 through flexible joints. This center gearbox serves mainly to move the rotation center in parallel and connect both shafts 302 and 304 without affecting the direction of rotation (i.e. employing an uneven number of plane gears mounted along its length). It should be appreciated that this arrangement enables the rotors to be canted while still using 90° gearboxes. At least one of the intermediate gears in center gearbox 306 may have a shaft that is open to the outside designated as 308, enabling power for accessories on either side of the face of gearbox 306, resulting in opposing directions of rotation (rotors not shown). The rotors preferably turn in opposite directions to eliminate torque imbalance on the vehicle. It should be appreciated that the connection between the two gearboxes 296 and 310 can be made also via a single shaft as shown in Fig. 14 thereby eliminating center gearbox 306 or via more than two shafts with added center gearboxes. As illustrated in Figs. 14 and 26a there is no redundancy to the load path to the forward gearbox and lift rotor and upon failure of the shaft (s) between the aft and forward lift rotor gearboxes the forward gearbox hence forward lift rotor becomes inoperative.

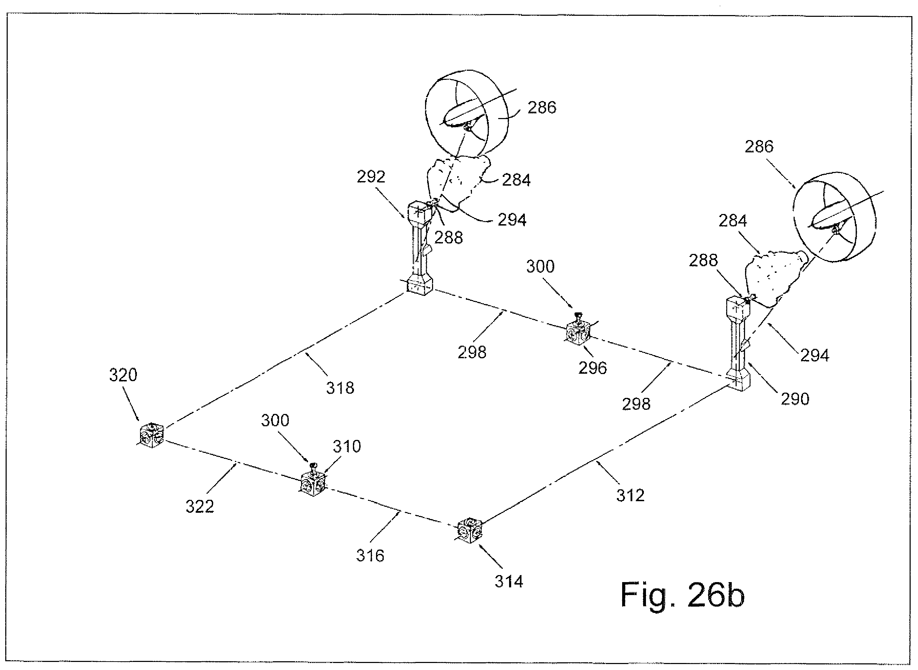

Fig. 26b illustrates an alteration to the transmission systems of Figs. 14 and 26a which enables redundancy of the single load path to the forward gearbox by adding at least one additional load path or route, thus making the design non-critical to shaft failure. In one of the preferred embodiments the single shaft(s) which connect(s) to the forward lift rotor gearbox 310 is converted into two redundant load passes or routes : one load pass via shaft 312, intermediate gearbox 314 and shaft 316, and the other via shaft 318, intermediate gearbox 320 and shaft 322. In this arrangement, shafts 312 and 318 are substantially parallel, while shafts 316 and 322 are substantially coaxial with each other and substantially perpendicular to the shafts 312, 318. Although such multiple shafts and gearboxes may seem cumbersome and costly, it has been found that in addition to providing a redundant route of power supply to the forward rotor, it can be advantageous to the overall system because the pinions attached to the aft rotor gearbox 296 as well as those connected to the aft transmissions 290 and 292 can be designed for lower torque. It should be further appreciated that under normal operating conditions, when both shafts 312 and 318 are operational, the torque of the forward rotor gearbox 310 is split between two pinions rather than one pinion of the single load path thereby reducing the loads of pinions and shafts compensating to some extent for the increase in number of components compared to the simpler schemes of Fig. 26a or Fig. 14.

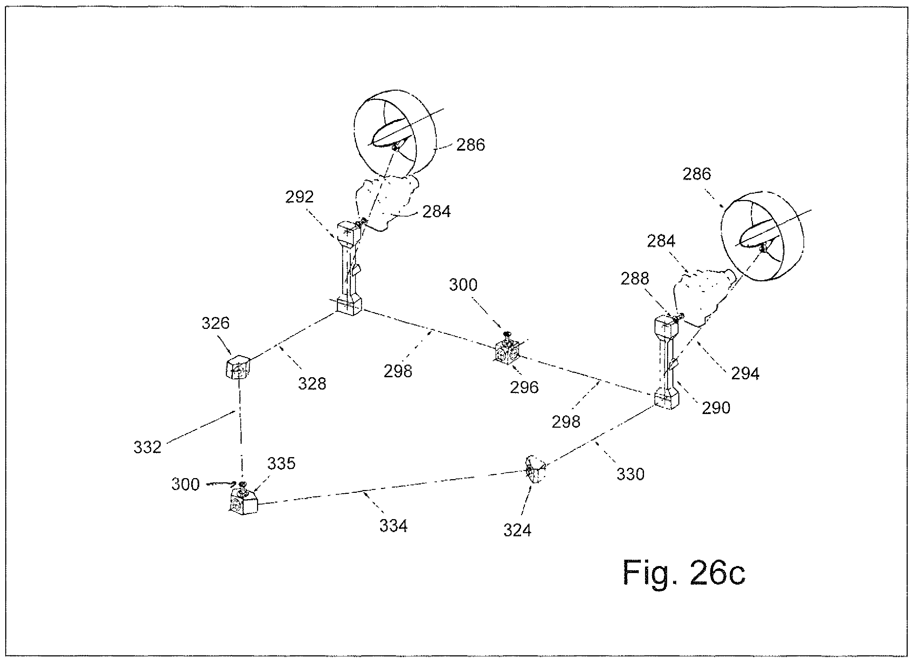

Fig. 26c illustrates another preferred embodiment of the present disclosure wherein the redundancy of the load path to the forward gearbox is maintained by using angled intermediate gearboxes 324 and 326 connected between transmissions 290, 292 respectively via shafts 328, 330 and the forward rotor gearbox 335 via shafts 332, 334 thereby enabling more flexibility in design of the appropriate transmission system as function of the required power distribution and geometric and location constraints. It should be appreciated that the staged path method of dividing the shaft into sections substantially as illustrated in 302 and 304 of Fig. 26a can be implemented also in the plural load paths embodiments of Figs. 26b and 26c by dividing some or all load paths into sections if such division is deemed advantageous, and also that the plural load paths method substantially similar to the embodiments illustrated in Figs. 26b and 26c can be implemented also in other embodiments such for example as vehicles having only a single engine or non-flying facilities and mechanisms which may benefit from the advantages of the herein disclosed redundancies.

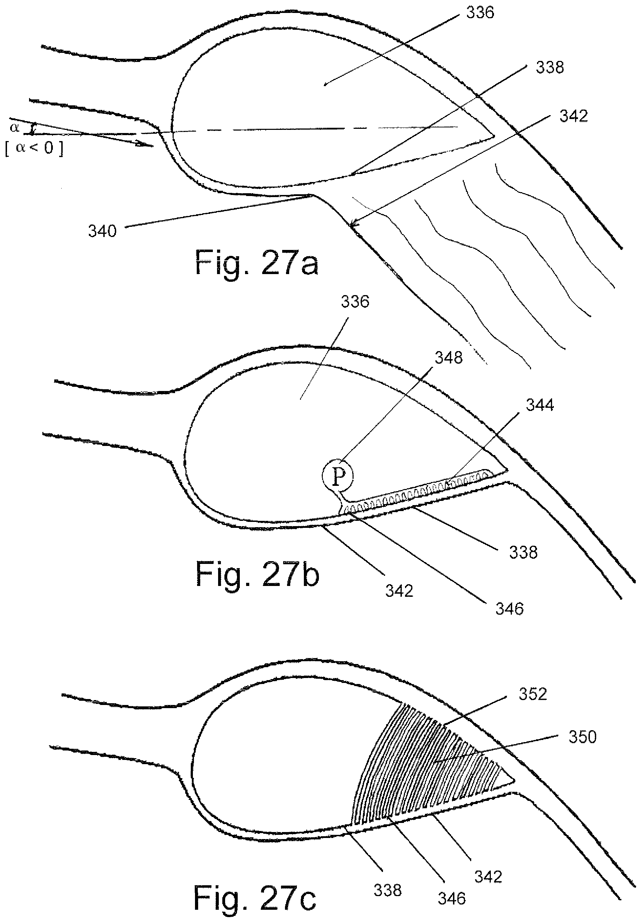

Figs. 27a-e schematically illustrate control of the boundary layer to prevent flow separation at the lower body surface. It is known that fluid flowing at the lower surface of a body such as, for example, a fuselage of a vehicle or a wing, may separate at a certain angle of attack and or velocity conditions for example at a negative angle of attack occurring when the vehicle is tilted forward in high speed flight, and this separation affects mostly negatively the overall lift and drag performance of the body. In Fig. 27a the body 336 with its lower surface 338 is tilted at negative angle of attack α and consequently at zone 340 of the lower surface of the body, a separation occurs and the fluid flow stream 342 is detached from the lower surface 338.

One common known way to reduce this separation is by introducing suction at the fluid boundary layer of the lower surface which can be achieved by creating holes or perforated segments in the trailing end of the lower surface and applying to them low pressure by means such as a pump generating suction and thereby reducing the separation of the fluid. As shown in Fig. 27b an array of hollow tubes 344 with their inlets open to the lower surface of the body at zone 346 is connected to a pumping system 348 which employs suction at the fluid boundary layer and thereby creates low pressure which attaches the flow stream 342 to the lower surface of the body yielding elimination or at least reduction of the separated zone.

An alternative to the pumping system or similar device suction method described hereinabove is presented in Fig. 27c according to which the creation of suction at the lower surface is achieved by utilizing a low pressure source which has been generated at another portion of the body. In one of the preferred embodiments a plurality of hollow, direct passages 350 are formed in the trailing end of the body, with their inlets open to the lower surface of the body at zone 346 and with outlets open to the upper surface of the body at zone 352 where low pressure exists due to aerodynamic features of the body or elements in its vicinity at certain flight conditions, whereby the pressure differential between zones 346 and 352 is enough to generate suction and fluid flow from zone 346 towards zone 352 through passages 350 which attach the flow stream 342 at the boundary layer to the lower surface 338 of the body thereby reducing or eliminating separation or detachment.

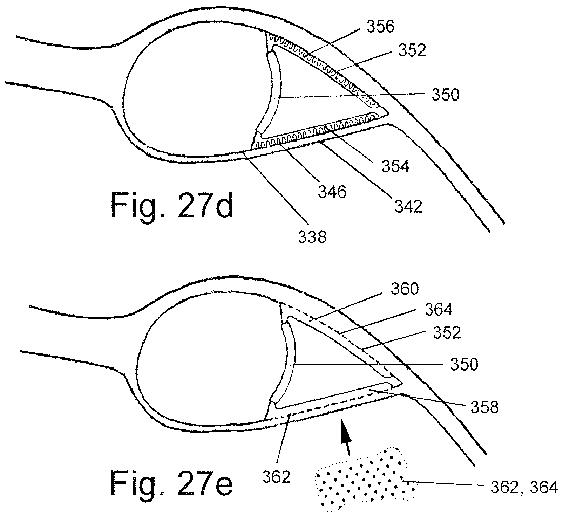

In another preferred embodiment as illustrated in Fig. 27d, the connection between zones 346 and 352 is made by pluralities of shorter passages 354 and 356 open to the corresponding body surfaces which are connected between them through an intermediate single or smaller number of main passages 350, each of bigger capacity than those of Fig. 27c, thereby may occupy less total space in the inside of the body between the clusters 354 and 356 and enabling it to be used for other purposes.

In another preferred embodiment illustrated in Fig. 27e the passages clusters 354 and 356 described hereinabove are replaced by substantially hollow compartments or manifolds 358 and 360 attached to the inside surfaces of the body, which surfaces are perforated to plurality of holes or orifices 362 and 364, enabling the through-flow of fluid whereby the compartments are connected between them through passages similar to 350 described in Fig. 27d hereinabove. It should be further appreciated that the pressure differential and flow of fluid between zones 346 and 352 can be utilized also for other purposes besides reducing the separation, for example as a heat transfer source causing temperature changes in desired parts or equipment in the body, and in such case, the configuration of the fluid flow system including the passages may be adjusted to suit also this other purpose.

It should be appreciated that the embodiments of the passages systems described in Figs. 27c-e hereinabove may have various forms and sizes depending upon requirements and constraints such as the shape of the body, internal available spaces, desired airflow and temperatures, and can be also combined with other suction creating systems such as, for example, pump 348 illustrated in Fig. 27b, thereby enabling the enhancement of flows or improved control of the flow rate. In another preferred embodiment of the disclosure hereinabove there is a possibility to close and open fully or partially all or part of the passages, openings and perforated holes described hereinabove as desired, like for example, in a ducted fan vehicle where the elimination of flow separation (and thereby also the flow between the higher and lower pressure zones) may not be necessary when the vehicle is in a hover mode.

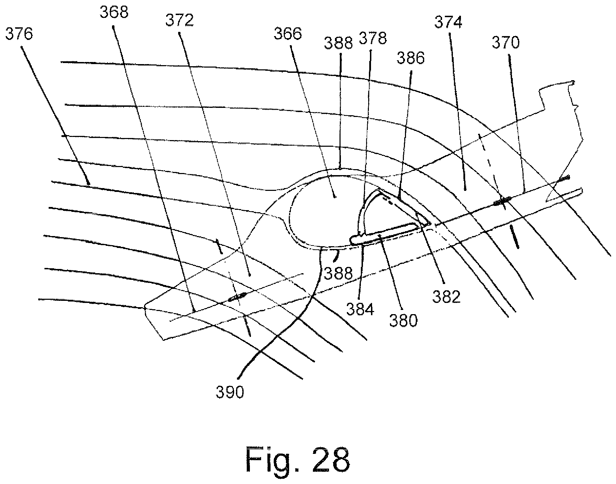

Fig. 28 schematically illustrates an aircraft having a fuselage with a center body 366, forward rotor 368 and aft rotor 370 wherein the rotors may be either open or enclosed fully or partially by respective ducts 372 and 374, flying forward with air streamlines 376 flowing typically from the upper inlet side of the rotors towards the lower exit side and passages 378 connected to compartments 380 and 382 at surfaces 384 and 386 respectively, operating in similar manner to the passage systems described in Figs. 27a-e hereinabove. According to the preferred embodiment of the present disclosure, the low pressure zone at surface 386, which was mentioned as 352 in Fig. 27c hereinabove, is created by the flow 388 along the upper surface trailing portion of the body caused by the combined concavity profile of the upper aft portion of the body with the rotor 370 placed about the trailing edge of the body. It should be appreciated that the rotor 370, the typical main purpose of which is to create lift to the vehicle by blowing air through, accelerates the flow over the upper surface of the body which is purposely concavely designed, and hence as a 'by product', the rotor 370 also becomes a primary, joint-contributing source for the low pressure at zone 386 causing suction at the boundary layer 384 as previously explained hereinabove, leaving the boundary layer flow 388 more attached to the lower surface 390. Furthermore it should be appreciated that the suction produced by contribution of the aft rotor 370 creates a total low pressure area at the upper aft portion of the body even at conditions such as a negative angle of attack when the aerodynamic features of the body become less or not effective in creating the desired said low pressure.

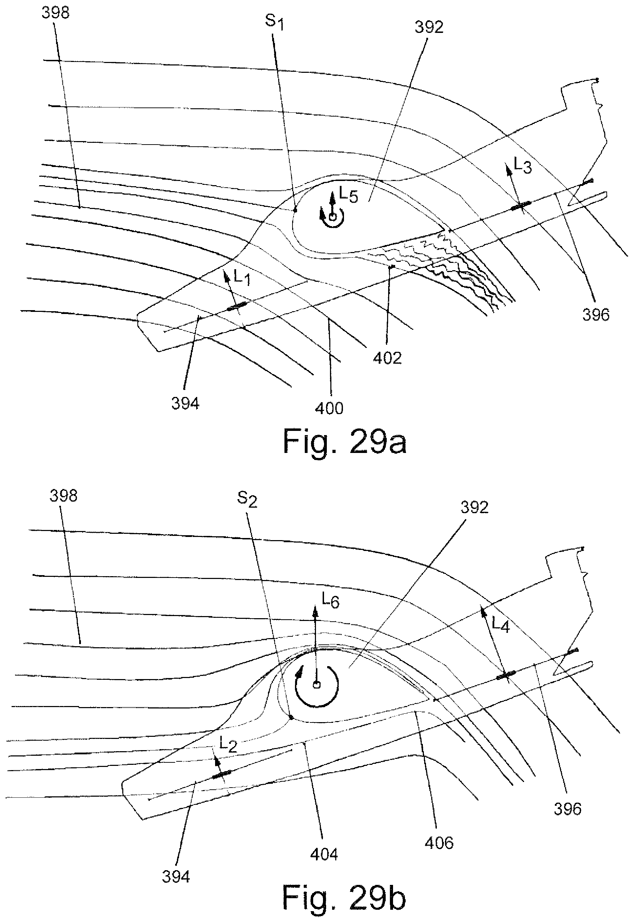

Fig. 29a-b schematically illustrate a vehicle similar to the vehicle of Fig. 28 having a fuselage with a center body 392, forward rotor 394 and aft rotor 396 flying forward in an airflow field 398 typical to the vehicle flowing substantially from the forward and upper inlet side of the rotors towards the aft and lower exit side.

Fig. 29a illustrates the flow field when both forward rotor 394 and aft rotor 396 are operating substantially in a similar manner, creating relatively high lifts L1 and L3 respectively, sharing the overall lift of the vehicle, and with the center body 392 creating lift L5 at the vehicle center-of-gravity, all these lifts adding to the total lift of the vehicle Lv wherein, due to the suction caused by the forward rotor, the flow 398 which was substantially horizontal before reaching the forward rotor is now affected and tilted downward as shown in 400, and does not have the necessary upwash component that is normally associated with the creation of the lift. As a result, the fuselage finds itself at a low effective angle of attack, hence with lift L5 lower than would be expected. Furthermore, due to the downward orientation at 400 of the effective flow, portions 402 of the flow about the lower surface of the body 392 tend to separate causing unnecessary drag. One common way to overcome detriments of reduced lift such as L5 is to increase the thrust of the rotors, thereby increasing their lift and compensating for the reduced lift L5. However, this further disturbs the flow conditions over the fuselage as described earlier.

In an attempt to solve this problem Fig. 29b illustrates the vehicle of Fig. 29a in a preferred embodiment which changes the balance between the forward and aft rotors 394, 396 in order to achieve total fuselage-increased lift and reduced drag, wherein the thrust and hence the lift L2 of the forward rotor 394 is selectively decreased, for example, by changing the rotor rotational speed, the pitch of the rotor blades, narrowing or partially blocking the through-air flow, or otherwise reducing the input from the power plant connected to the rotor. This decrease causes the incoming flow 398 not to experience anymore the high suction of the rotor, enabling it to continue less affected by the rotor in a less tilted, substantially horizontal direction 404 with a proper upwash and meet the body at a stagnation point S2 relatively lower than stagnation point S1 of Fig. 29a, thereby creating higher lift L6. It should be also appreciated that the reduction in the downward flow caused by reducing the thrust of the forward rotor also reduces or substantially avoids the separation of flow at the lower surface of body 392 as was the case in Fig. 29a, and the flow continues not separated 406 along the surface.

It should be further appreciated that in this new situation of the present embodiment of the forward rotor producing less lift or even no lift at high speed flight, and depending also on the additional lift now obtained through the center body, the aft rotor may also have to be selectively re-adjusted such as produce higher lift L4 in order to balance the remaining lift as well as the pitching moment of the vehicle as a whole.

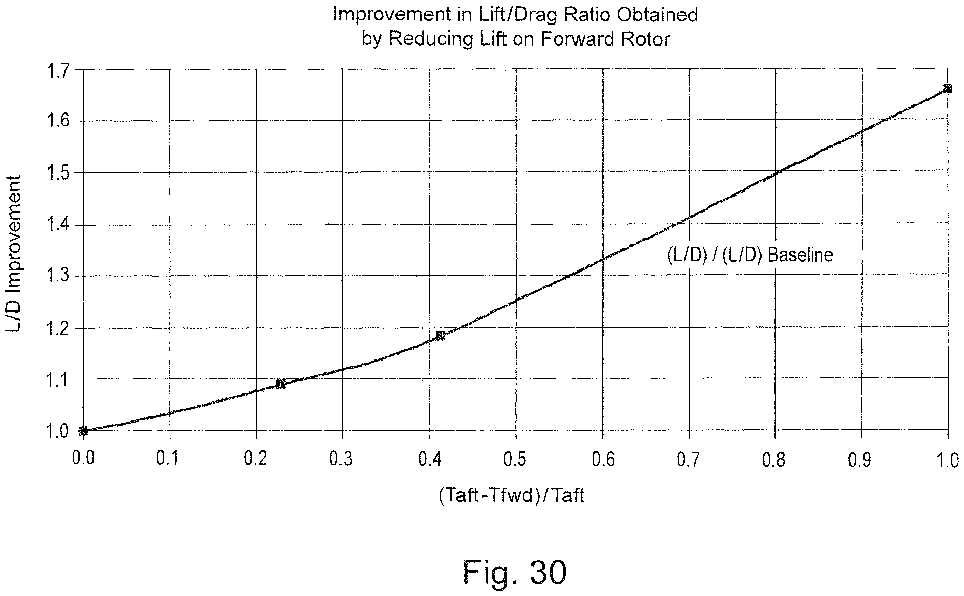

Fig. 30 schematically illustrates an exemplary improvement in Lift/Drag ratio of a vehicle caused by employing a relative change to the rotors lift as illustrated in Fig. 29b hereinabove wherein the horizontal axis of the graph represents the normalized difference in lift between the forward and aft rotors and the vertical axis of the graph represents the lift over drag improvement of the vehicle whereby the increase in the normalized difference in lift between the forward and aft rotors increases also the lift over drag improvement of the vehicle and for example point 6400 shows that it is enough to create a 20 percent difference between the lift of both rotors in order to obtain a 50 percent improvement in the vehicle's L/D ratio. It should be appreciated that the graph illustrated in Fig. 30 represents a specific vehicle at certain flight conditions and other vehicles of different shapes, rotors and characteristics and flight conditions would produce different graphs.

Some of the preferred embodiments which can suitably accommodate part or all of the features which were disclosed in Figs. 24-30 hereinabove are typically vehicles substantially as illustrated in Figs. 1, 6, 7, 8-13, 16-18 hereinabove or their related derivatives and developments or other aerial vehicles especially of the short/vertical takeoff and landing type and ducted unducted fans.

While the invention has been described with respect to several preferred embodiments, it will be appreciated that these are set forth merely for purposes of example, and that many other variations, modifications and applications of the invention will be apparent.

## Claims

1. A method of operating a VTOL vehicle (2) in forward flight, the vehicle (2) having a fuselage (3) supporting a forward lift fan (4) and an aft lift fan (5), a center portion of the fuselage (3) having a substantially airfoil shape, the method comprising:
(a)generating lift forces at the forward and aft lift fans and on said center portion of said fuselage (3); and
(b) reducing the lift at the forward lift fan (4) relative to the lift at the aft lift fan (5) to thereby lessen suction of air into the forward lift fan (4) and thereby increase overall vehicle lift circulation and thus also the VTOL vehicle's lift-to-drag ratio, while contributing to a reduction of separation of flow at a lower surface of said center portion of the fuselage (3).

2. The method of claim 1 wherein step (b) is carried out by reducing rotational speed of the forward lift fan (4).

3. The method of claim 1 wherein step (b) is carried out by changing blade pitch of the forward lift fan (4).

4. The method of claim 1 wherein step (b) is carried out by blocking air flow through the forward lift fan (4).

5. The method of claim 1 wherein step (b) is carried out by reducing input from a power plant driving the forward lift fan (4).

6. The method of claim 1 and further comprising (c) increasing lift at the aft lift fan (5) in consideration of reduced lift at the forward lift fan (4) and the lift generated on the center portion of the fuselage (3).

7. The method of claim 1 and further comprising creating a suction force along a lower surface of said center portion by utilizing a lower pressure source generated at another portion of the fuselage (3) to thereby attach the flow stream at the boundary layer to the lower surface.

8. A VTOL vehicle (2) having a fuselage (3) supporting a forward lift fan (4) and an aft lift fan (5) **characterized by** a center portion of the fuselage (3) having a substantially airfoil shape in combination with means, in forward flight, for reducing lift at the forward lift fan (4) relative to lift at the aft lift fan (5).

9. The VTOL vehicle (2) of claim 8 further **characterized by** at least one hollow passage having an inlet along a trailing end portion of a lower surface of the fuselage (3) and an outlet along a trailing end portion of an upper surface of the fuselage (3), such that, in flight, a pressure differential between an upper surface zone and a lower surface zone will generate suction along said lower surface sufficient to attach a boundary layer flow stream to said lower surface.

10. The VTOL vehicle (2) of claim 8 wherein at least said one inlet and said at least one outlet are connected through one or more intermediate passages.

11. The VTOL vehicle (2) of claim 8 wherein said at least one inlet comprises plural inlets and said at least one outlet comprises plural outlets, and wherein said plural inlets and said plural outlets connect to respective manifolds that are in turn, connected to one or more intermediate passages.

12. The VTOL vehicle (2) of claim 8 wherein at least said one inlet comprises plural inlets and said at least one outlet comprises plural outlets, each inlet connected to a corresponding outlet by a single discrete passage.

13. The VTOL vehicle (2) of claim 8 further **characterized by** a redundant actuator assembly for controlling an output in a control system of the VTOL vehicle (2) which includes n actuators divided into two groups, each group including n/2 single-channel actuators, each adapted to control specified control elements of said vehicle control system, and plural, single-channel actuators of each group arranged in series; one actuator of each group connected to a chassis, and another actuator of each group connected to a rocker arm pivotally secured to the linear output, wherein movement of the linear output is affected by movement of any one of said single-channel actuators.

14. The VTOL vehicle (2) of claim 13 wherein each of said actuators is a linear actuator, and wherein actuators of each group are connected at linearly-moveable joints.

15. The VTOL vehicle (2) of claim 13 wherein said control elements include variable pitch propeller and a plurality of adjustable directional vanes associated with each of said lift fans.

## Patentansprüche

1. Verfahren zum Betrieb eines VTOL-Fahrzeugs (2) im Vorwärtsflug, wobei das Fahrzeug (2) einen Rumpf (3) aufweist, der ein vorderes Auftriebsflügelrad (4) und ein hinteres Auftriebsflügelrad (5) stützt, wobei ein Zentralabschnitt des Rumpfs (3) im Wesentlichen eine Tragflächenform aufweist, das Verfahren umfassend:
(a) Erzeugen von Auftriebskräften an dem vorderen und hinteren Auftriebsflügelrad und an besagtem Zentralabschnitt besagten Rumpfs (3); und
(b) Reduzieren des Auftriebs an dem vorderen Auftriebsflügelrad (4) relativ zu dem Auftrieb an dem hinteren Auftriebsflügelrad (5),um dadurch Ansaugen von Luft in das vordere Flügelrad (4) hinein zu reduzieren und dadurch ein Gesamtfahrzeugsauftriebszirkulation und somit auch die Gleitzahl (lift-to-drag ratio) des VTOL-Fahrzeugs zu erhöhen, während zu einer Reduktion einer Strömungsablösung an einer unteren Oberfläche besagten Zentralabschnitts des Rumpfs (3) beigetragen wird.

2. Verfahren nach Anspruch 1, wobei Schritt (b) durch Reduzieren einer Rotationsgeschwindigkeit des vorderen Auftriebsflügelrads (4) ausgeführt wird.

3. Verfahren nach Anspruch 1, wobei Schritt (b) durch Ändern einer Flügelsteigung des vorderen Auftriebsflügelrads (4) ausgeführt wird.

4. Verfahren nach Anspruch 1, wobei Schritt (b) durch Blockieren von Luftströmung durch das vordere Auftriebsflügelrad (4) hindurch ausgeführt wird.

5. Verfahren nach Anspruch 1, wobei Schritt (b) durch Reduzieren einer Energiezufuhr von einer Energieerzeugungsanlage durchgeführt wird, die das vordere Auftriebsflügelrad (4) antreibt.

6. Verfahren nach Anspruch 1 und ferner umfassend (c) Erhöhen von Auftrieb an dem hinteren Auftriebsflügelrad (5) unter Berücksichtigung eines reduzierten Auftriebs an dem vorderen Auftriebsflügelrad (4) und dem Auftrieb, der an dem Zentralabschnitt des Rumpfs (3) erzeugt wird.

7. Verfahren nach Anspruch 1 und ferner umfassend Erzeugen einer Saugkraft entlang einer unteren Oberfläche besagten Zentralabschnitts durch Verwendung einer Quelle niedrigeren Drucks, der an einem anderen Anschnitt des Rumpfs (3) erzeugt wird, um dadurch die Strömung an der Grenzschicht zu der unteren Oberfläche anzuheften.

8. VTOL-Fahrzeug (2), das einen Rumpf (3) aufweist, der ein vorderes Auftriebsflügelrad (4) und ein hinteres Auftriebsflügelrad (5) stützt, **gekennzeichnet durch** einen Zentralabschnitt des Rumpfs (3), der im Wesentlichen eine Tragflächenform aufweist, in Kombination mit Mitteln zum Reduzieren von Auftrieb an dem vorderen Auftriebsflügelrad (4) relativ zu Auftrieb an dem hinteren Flügelrad (5) im Vorwärtsflug.

9. VTOL-Fahrzeug (2) nach Anspruch 8, ferner **gekennzeichnet durch** wenigstens eine hohle Passage, die einen Einlass entlang eines nachlaufenden Endabschnitts einer unteren Oberfläche des Rumpfs (3) und einen Auslass entlang eines nachlaufenden Endabschnitts einer oberen Oberfläche des Rumpfs (3) aufweist, sodass im Flug eine Druckdifferenz zwischen einer oberen Oberflächenzone und einer unteren Oberflächenzone einen Sog entlang besagter unterer Oberfläche generieren wird, der ausreicht, um eine Grenzschichtströmung an besagte untere Oberfläche anzuhaften.

10. VTOL-Fahrzeug (2) nach Anspruch 8, wobei wenigstens besagter eine Einlass und besagter wenigstens eine Auslass durch eine oder mehrere dazwischenliegende Passagen verbunden sind.

11. VTOL-Fahrzeug (2) nach Anspruch 8, wobei besagter wenigstens eine Einlass viele Einlässe umfasst und besagter wenigstens eine Auslass viele Auslässe umfasst und wobei besagte viele Einlässe und besagte viele Auslässe sich an entsprechende Krümmer anschließen, die wiederum an eine oder mehrere dazwischenliegende Passagen angeschlossen sind.

12. VTOL-Fahrzeug (2) nach Anspruch 8, wobei wenigstens besagter eine Einlass viele Einlässe umfasst und besagter wenigstens eine Auslass viele Auslässe umfasst, wobei jeder Einlassmit einem entsprechenden Auslass durch eine einzelne diskrete Passage verbunden ist.

13. VTOL-Fahrzeug (2) nach Anspruch 8, ferner **gekennzeichnet durch** eine redundante Aktuatorbaugruppe zum Steuern eines Ausgangs in ein Steuersystem des VTOL-Fahrzeugs (2), welches n Aktuatoren einschließt, die in zwei Gruppen aufgeteilt sind, wobei jede Gruppe n/2 Einkanalaktuatoren einschließt, wobei jeder eingerichtet ist, um spezifizierte Steuerelemente besagten Fahrzeugsteuersystems zu steuern, und viele Einkanalaktuatoren jeder Gruppe in Serie angeordnet sind; ein Aktuator jeder Gruppe ist mit einem Chassis verbunden und ein anderer Aktuator jeder Gruppe ist mit einem Kipphebel verbunden, der schwenkbar an dem linearen Ausgangs befestigt ist, wobei Bewegung des linearen Ausgangs durch Bewegung von irgendeinem der besagten Einkanalaktuatoren bewirkt wird.

14. VTOL-Fahrzeug (2) nach Anspruch 13, wobei jeder der besagten Aktuatoren ein linearer Aktuator ist und wobei Aktuatoren jeder Gruppe an linear-beweglichen Gelenken verbunden sind.

15. VTOL-Fahrzeug (2) nach Anspruch 13, wobei besagte Steuerelemente Verstellpropeller und eine Vielzahl an einstellbaren gerichteten Leitschaufeln einschließen, die zu jedem besagter Auftriebsflügelräder zugehörig sind.

## Revendications

1. Procédé pour faire fonctionner un véhicule VTOL (2) en vol vers l'avant, le véhicule (2) comportant un fuselage (3) supportant une soufflante de portance avant (4) et une soufflante de portance arrière (5), une partie centrale du fuselage (3) ayant une forme sensiblement de surface portante, le procédé comprenant les étapes consistant à :
(a) générer des forces de portance au niveau des soufflantes de portance avant et arrière et sur ladite partie centrale dudit fuselage (3) ; et
(B) réduire la portance de la soufflante de portance avant (4) par rapport à la portance de la soufflante de portance arrière (5) afin de diminuer l'aspiration d'air dans la soufflante de portance avant (4) et ainsi augmenter la circulation de portance de véhicule et donc aussi le rapport portance-traînée du véhicule VTOL, tout en contribuant à une réduction de séparation de l'écoulement au niveau d'une surface inférieure de ladite partie centrale du fuselage (3).

2. Procédé selon la revendication 1, dans lequel l'étape (b) est effectuée en réduisant la vitesse de rotation de la soufflante de portance avant (4).

3. Procédé selon la revendication 1, dans lequel l'étape (b) est effectuée en changeant le pas de pales de la soufflante de portance avant (4).

4. Procédé selon la revendication 1, dans lequel l'étape (b) est effectuée en bloquant un écoulement d'air à travers la soufflante de portance avant (4).

5. Procédé selon la revendication 1, dans lequel l'étape (b) est effectuée en réduisant une entrée depuis une centrale électrique entraînant la soufflante de portance avant (4).

6. Procédé selon la revendication 1 et comprenant en outre (c) consistant à augmenter la portance au niveau de la soufflante de portance arrière (5) en considération d'une portance réduite de la soufflante de portance avant (4) et de la portance générée sur la partie centrale du fuselage (3).

7. Procédé selon la revendication 1 et comprenant en outre la création d'une force d'aspiration le long d'une surface inférieure de ladite partie centrale en utilisant une source de pression inférieure générée au niveau d'une autre partie du fuselage (3) pour ainsi relier le flux d'écoulement au niveau de la couche limite vers la surface inférieure.

8. Véhicule VTOL (2) ayant un fuselage (3) supportant une soufflante de portance avant (4) et une soufflante de portance arrière (5), **caractérisé par** une partie centrale du fuselage (3) ayant une forme sensiblement de surface portante en combinaison avec des moyens, en vol vers l'avant, pour réduire la portance au niveau de la soufflante de portance avant (4) par rapport la portance au niveau de la soufflante de portance arrière (5).

9. Véhicule VTOL (2) selon la revendication 8, **caractérisé en outre par** au moins un passage creux ayant une entrée le long d'une partie d'extrémité de fuite d'une surface inférieure du fuselage (3) et une sortie le long d'une partie d'extrémité de fuite d'une surface supérieure du fuselage (3) de sorte qu'en vol, un différentiel de pression entre une zone de surface supérieure et une zone de surface inférieure générera une aspiration le long de ladite surface inférieure suffisante pour relier un flux d'écoulement de couche limite à ladite surface inférieure.

10. Véhicule VTOL (2) selon la revendication 8, dans lequel au moins ladite une entrée et ladite au moins une sortie sont reliées par l'intermédiaire d'un ou plusieurs passages intermédiaires.

11. Véhicule VTOL selon la revendication 8, dans lequel ladite au moins une entrée comprend plusieurs entrées et ladite au moins une sortie comprend plusieurs sorties, et dans lequel lesdites plusieurs entrées et lesdites plusieurs sortie sont reliées à des collecteurs respectifs qui sont à leur tour reliés à un ou plusieurs passages intermédiaires.

12. Véhicule VTOL (2) selon la revendication 8, dans lequel ladite au moins une entrée comprend plusieurs entrées et ladite au moins une sortie comprend plusieurs sorties, chaque entrée étant reliée à une sortie correspondante par un seul passage distinct.

13. Véhicule VTOL (2) selon la revendication 8, **caractérisé en outre par** un ensemble actionneur redondant pour commander une sortie dans un système de commande du véhicule VTOL (2) qui comprend n actionneurs divisés en deux groupes, chaque groupe incluant n/2 actionneurs à canal unique, chacun étant adapté pour commander des éléments de commande spécifiés dudit système de commande de véhicule, et plusieurs actionneurs à canal unique de chaque groupe agencés en série ; un actionneur de chaque groupe relié à un châssis, et un autre actionneur de chaque groupe relié à un bras oscillant fixé de manière pivotante à la sortie linéaire, dans lequel le mouvement de la sortie linéaire est affecté par le mouvement de l'un quelconque desdits actionneurs à canal unique.

14. Véhicule VTOL (2) selon la revendication 13, dans lequel chacun desdits actionneurs est un actionneur linéaire, et dans lequel des actionneurs de chaque groupe sont reliés à des joints mobiles de manière linéaire.

15. Véhicule VTOL (2) selon la revendication 13, dans lequel lesdits éléments de commande comprennent une hélice à pas variable et plusieurs aubes directionnelles réglables associées à chacune desdites soufflante de portance.
